# EUROPEAN PATENT APPLICATION

(11) **EP 0 987 574 A2**
(43) Date of publication of application: **22.03.2000**
(21) Application number: 99117465.7
(22) Date of filing: 09.09.1999
(51) Int. Cl.: G02B 6/44

(54) **Fiber optic riser cable assembly**

(30) Priority: 15.09.1998 US 153348
(71) Applicant: Tyco Submarine Systems Ltd., Eatontown, NJ 07724 (US)
(72) Inventor: Adl, Ali, Freehold, New Jersey 07728 (US)
(74) Representative: VOSSIUS & PARTNER

(57) **Abstract**

A fiber optic termination assembly is provided to terminate a fiber optic riser cable (200) to a local communications cable (100) that is contained on a dynamic platform. The termination assembly includes a first cable connector assembly and a second cable connector assembly where the first cable connector assembly and second cable connector assembly are securely joined together to form a rigid connection between the first and second connector assemblies. The first cable connector assembly secures the armor jacket of the riser cable within the connector assembly. The second cable connector assembly secures the internal strength members of both the local cable and the riser cable within it and joins the fibers of the local cable to the fibers of the riser cable.

## Description

The present invention relates to a riser cable assembly. More specifically, the invention provides for connecting a fiber optic riser cable to a local fiber optics communications cable on a dynamic platform.

Fiber optic cables have become increasingly utilized for providing communications capabilities to various facilities due to their capacity for carrying large volumes of information. A trunk fiber optic cable can be provided to a facility where connections are made to local cables within the facility in order to provide a fiber optic communications capability to that facility. However, there are difficulties encountered when attempting to provide fiber optic communication capabilities to dynamic, or moving, facilities/structures and particularly dynamic structures that are located in harsh environments. A typical example of a dynamic structure that is located in a harsh environment that could benefit from fiber optic communications but has not been typically serviced by fiber optic cables is an off-shore oil rig platform. The platform itself, and any structures or connections made to the platform, are subject to great environmental forces due to wind, waves, currents, etc. Therefore, the task of terminating a fiber optic riser cable to a local communications cable on a dynamic off-shore oil platform has not been successfully accomplished. The termination must be ruggedly constructed in order to withstand the great environmental forces that it will be subjected to but yet provide for the precise joining of the trunk cable's fibers to the local communication cable's fibers. Because there currently exists a lack of an effective cable termination assembly in the art to terminate a fiber optic riser cable to a local communications cable on a dynamic off-shore oil platform, these facilities have not been able to benefit from the advantages of utilizing fiber optic communication systems.

Therefore, it would be desirable to provide a fiber optics termination assembly for joining a fiber optics riser cable to a local communications cable on a non-rigidly mounted, or dynamic, off-shore structure.

The drawbacks in the prior art are overcome by the present invention for a fiber optic riser cable assembly. In accordance with an embodiment of the present invention, a fiber optic termination assembly is provided to terminate a fiber optic riser cable to a local communications cable that is contained on a dynamic platform. The termination assembly includes a first cable connector assembly and a second cable connector assembly where the first cable connector assembly and second cable connector assembly are securely joined together to form a rigid connection between the first and second connector assemblies. The first cable connector assembly secures the armor jacket of the riser cable within the connector assembly. The second cable connector assembly secures the internal strength members of both the local cable and the riser cable within it and joins the fibers of the local cable to the fibers of the riser cable.

In this manner, the present invention provides for a secure and rigid termination between a fiber optic riser cable and a local communications cable that is installed on a dynamic platform.

Preferred embodiments of the present invention are exemplified by the Figures.
Fig. 1 is a perspective view of one embodiment for the riser cable assembly of the present invention.
Fig. 2 is a second illustration of the riser cable assembly of Fig. 1.
Fig. 3 is a top view of the riser cable assembly of Fig. 1.
Fig. 4 is a cross-sectional view of the riser cable assembly as taken along line 4-4 in Fig. 3.
Fig. 5 illustrates one embodiment for a jack support assembly of the present invention.
Fig. 6 illustrates one embodiment for a split armor clamp of the present invention.
Fig. 7 is a cross-sectional view of the lower cable connector assembly as shown in Fig. 4.
Fig. 8 is a cross-sectional view of the dual armor socket body as shown in Fig. 4.
Fig. 9 illustrates the outer sleeve and outer plug of the lower connector assembly.
Fig. 10 is a cross-sectional view of the inner sleeve and inner plug of the lower connector assembly as shown in Fig. 4.
Fig. 11 is a cross-sectional internal view of the upper cable connector assembly as shown in Fig. 4.
Fig. 12 is a cross-sectional view of the upper cable connector assembly as taken along line 12-12 in Fig. 11.
Fig. 13 is a side view of one embodiment of the riser cable assembly of the present invention as installed in a dynamic platform.
Fig. 14 is a top view of the riser cable assembly of Fig. 13.
Fig. 15 is a cross-sectional view of the riser cable assembly of Fig. 13 taken along line 15-15 of Fig. 14.
Fig. 16 is a cross-sectional view of the riser cable assembly of Fig. 13 taken along line 16-16 of Fig. 14.
Fig. 17 is a cross-sectional view of the riser cable assembly of Fig. 13 taken along line 17-17 of Fig. 14.
Fig. 18 is a side view of a second embodiment of the riser cable assembly of the present invention as installed in a dynamic platform.
Fig. 19 is a top view of the riser cable assembly of Fig. 18.
Fig. 20 is a cross-sectional view of the riser cable assembly of Fig. 18 taken along line 20-20 of Fig. 19.
Fig. 21 is a cross-sectional view of the riser cable assembly of Fig. 18 taken along line 21-21 of Fig. 19.

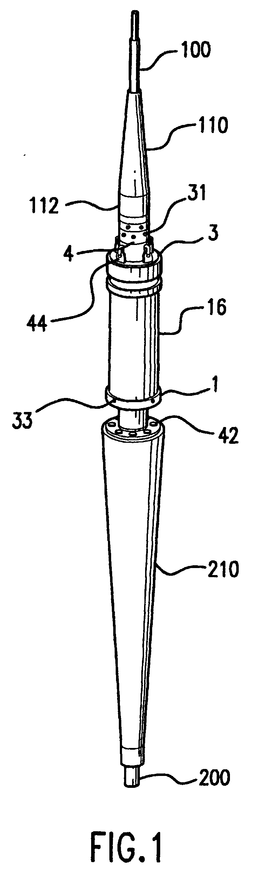

Figs. 1, 2 and 3 illustrate one embodiment for the riser cable assembly of the present invention. As can be seen, a local fiber optics communications cable 100 is connected to a fiber optic riser cable 200 by housing assembly 16. Local communications cable 100 provides a fiber optics communications capability to a local platform, e.g., an off-shore floating oil rig platform, and riser cable 200 provides a communications signal to local cable 100. Housing assembly 16 provides for optical and physical connection of the optical fibers in cable 100 to the optical fibers in riser cable 200. Each fiber optic cable, namely local cable 100 and riser cable 200, may contain multiple fibers, dependent upon the communications requirement of the particular local platform on which the present invention is utilized.

Both local cable 100 and riser cable 200 include stiffeners 110 and 210, respectively, to support and protect the cables at the connection point to housing 16. Stiffener 210, and thus riser cable 200, is joined to housing 16 by boot adaptor 1. Boot adaptor 1 is physically connected to stiffener 210 by utilizing screws 42. Boot adaptor 1 is similarly physically connected to housing 16 by utilizing screws 33. Riser cable 200 passes up through boot adaptor 1 and is received within housing 16 for ultimate connection with local cable 100.

Stiffener 110, and thus local cable 100, is joined to housing 16 by utilizing cap assembly 3. Stiffener 110 includes buffer assembly 112. Buffer assembly 112 is joined to cap assembly 3 by utilizing screws 31 to attach buffer assembly 112 to cap nut 4 of cap assembly 3. Cap assembly 3 is also joined to housing 16 by utilizing screws.

Cylinder 13 of cap assembly 3 allows for local cable 100 to pass through cap assembly 3 and into housing assembly 16 to ultimately be joined with riser cable 200.

Also shown in Figs. 1, 2, and 3 are shackles 44 which are included on cap assembly 3. Shackles 44 provide for attachment of various devices which can assist in moving and positioning the riser cable assembly.

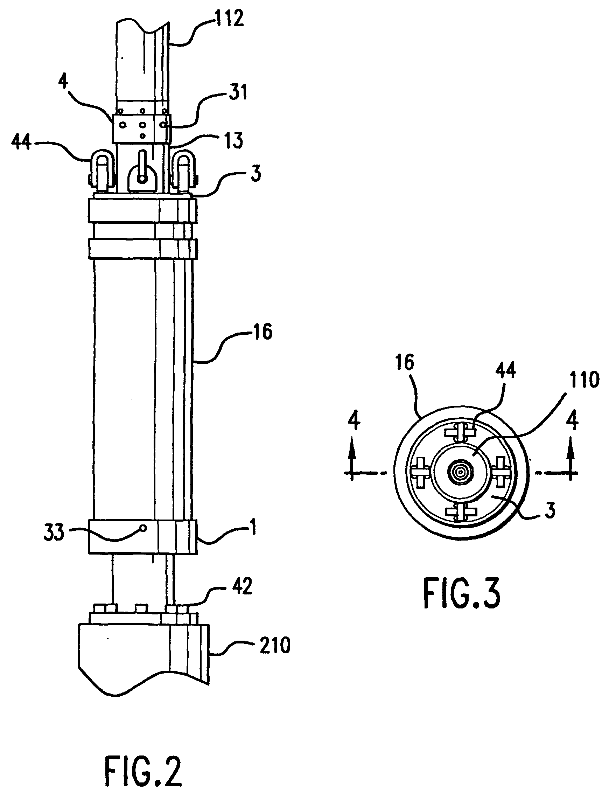

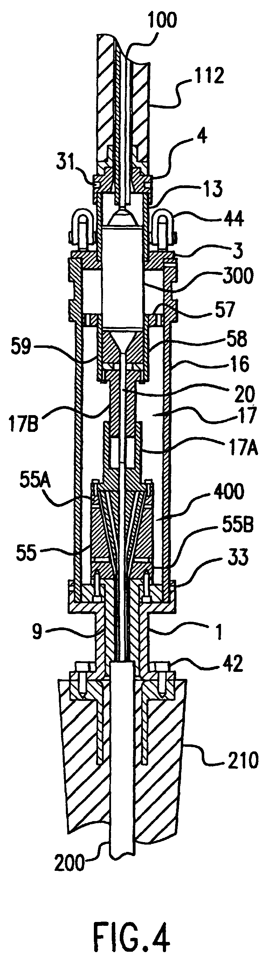

Fig. 4 is a cross-sectional view of the riser cable assembly as taken along line 4-4 in Fig. 3. As can be seen and as will be described, local cable 100 is received in housing 16 and is secured within housing 16 by a single connection. Local cable 100 is secured within housing 16 by upper cable connector assembly 300. In upper cable connector assembly 300, the strength members contained within the core jacket of local cable 100 are secured within connector assembly 300 and the optical fibers within local cable 100 are fanned out.

Riser cable 200 is received in housing 16 and is secured within housing 16 at two connection points. The first connection point for riser cable 200 within housing 16 is lower cable connector assembly 400. In lower cable connector assembly 400, the dual armor jackets of riser cable 200 are secured within the connector assembly. The second connection point for riser cable 200 within housing 16 is upper cable connector assembly 300. The core jacket 20 of riser cable 200 passes through lower cable connector assembly 400 and into upper cable connector assembly 300. Within upper cable connector assembly 300, the strength members contained within core jacket 20 are secured to the connector assembly and the optical fibers within riser cable 200 are also fanned out for joining with the optical fibers of local cable 100.

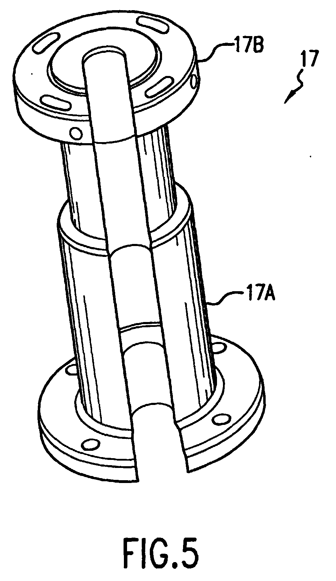

Upper cable connector assembly 300 is physically and securely connected to lower cable connector assembly 400 by a connecting member, or jack support assembly 17, as is shown in Fig. 5. Jack support assembly 17 is comprised of a female receiving portion 17A which is secured to lower cable connector assembly 400 and a male threaded portion 17B which is ultimately secured to upper cable connector assembly 300. Male threaded portion 17B is threaded into female receiving portion 17A to rigidly secure upper cable connector assembly 300 to lower cable connector assembly 400. Thus, jack support assembly 17 secures upper cable connector assembly 300 to lower cable connector assembly 400.

In this manner, a secure, rigid, connection is made between local cable 100 and riser cable 200. Local cable 100, which provides communications capability to a dynamic platform such as a floating oil rig, is secured to housing 16 by utilizing one connection point. Riser cable 200, which extends up from the sea floor, is rigidly secured within housing 16 by utilizing two connection points. One of these connection points secures the dual armor jacketing of the riser cable to the housing and the second of these connection points secures the strength members of the inner core jacket of the riser cable to the housing.

The present invention is not limited to any specific method of terminating local cable 100 and riser cable 200 within housing 16. One embodiment for the connections within upper cable connector assembly 300 and lower cable connector assembly 400 is provided below.

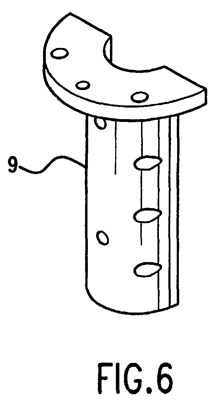

As can be seen in Fig. 4, riser cable 200 extends up through boot adaptor 1 and into housing 16. Riser cable 200 is received within split armor clamp 9 and extends up through clamp 9. The split armor clamp serves to position and secure riser cable 200 within boot adaptor 1 as the riser cable enters the lower cable connector assembly 400. The split armor clamp is preferably constructed of steel and is formed of two similarly constructed structures, one of which is shown in Fig. 6. When the two structures of split armor clamp 9 are joined together, a center, cylindrical opening is formed in the split clamp to receive riser cable 200 through it. Clamp 9 secures the riser cable within it though pressure applied to the riser cable when joining the two structures of the clamp together. Clamp 9 is secured at its upper end to lower cable connector assembly 400 and housing 16.

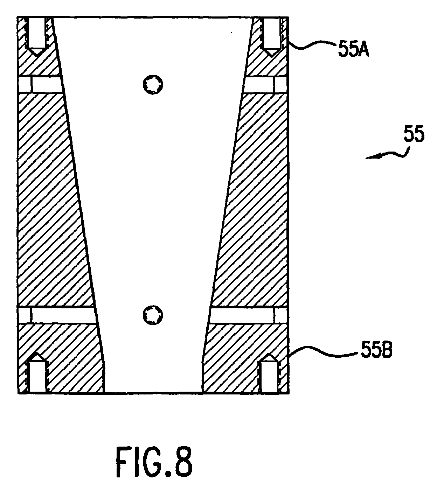

Figs. 4 and 7-10 illustrate one embodiment for the lower cable connector assembly 400 of the present invention. Connector assembly 400 consists of dual armor socket body 55, as shown in Fig. 8, and, contained within socket body 55, a dual cold flow termination arrangement, as will be described below. Dual armor socket body 55 is fabricated out of a high strength material such as steel or beryllium copper. Dual armor socket body 55 is secured at its upper end 55A to jack support assembly 17 and at its lower end 55B to split armor clamp 9 and housing assembly 16.

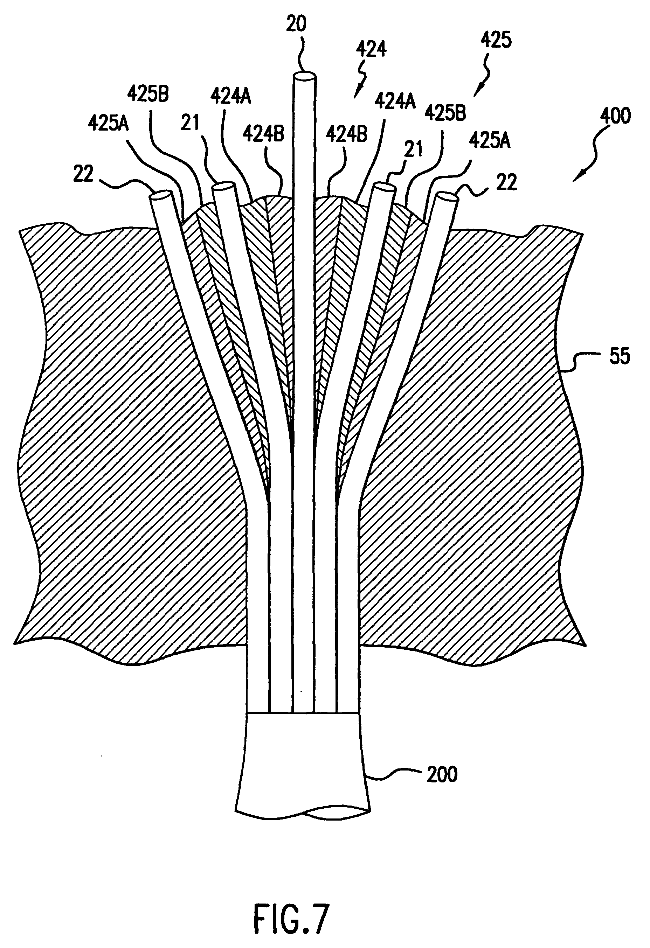

As can be seen in Fig. 7, riser cable 200 is a dual armor jacket cable. The dual armor jackets of cable 200 are illustrated as outer armor jacket 22 and inner armor jacket 21. Before riser cable 200 is received within boot adaptor 1 and in housing 16, the dual armor jackets are exposed by stripping away the outermost jacket of riser cable 200. Both armor jackets 21 and 22 are received within lower cable connector assembly 400 in dual armor socket body 55.

Within dual armor socket body 55, both dual jackets 21 and 22 are secured to lower cable connector assembly 400. Fig. 7 illustrates one embodiment for securing dual armor jackets 21 and 22 within lower cable connector assembly 400. In the disclosed embodiment for securing a dual armor jacket cable, the principles disclosed in U.S. Patent Number 4,507,008, which is incorporated by reference herein in its entirety and which discloses a cold flow stranded cable termination arrangement for terminating a fiber optic cable that contains a single armor jacket, have been applied to this different application for securing a dual armor jacketed cable.

As shown in Fig. 7, riser cable 200 is received within lower cable connector assembly 400 in dual armor socket body 55. Outer armor jacket 22 and inner armor jacket 21 are separated from each other and are separated from core jacket 20. To secure riser cable 200 within lower cable connector assembly 400, two cold flow securing assemblies, namely outer assembly 425 and inner assembly 424 are utilized. Each cold flow securing assembly is similarly constructed.

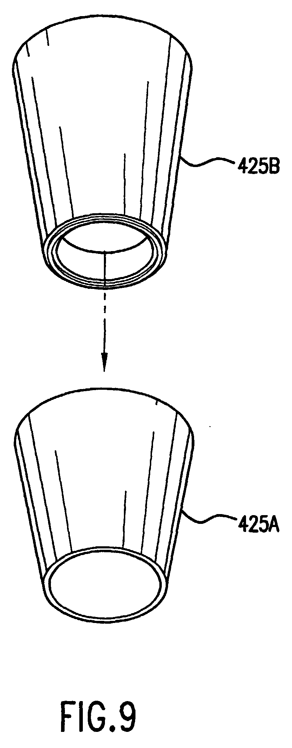

Outer cold flow assembly 425 consists of outer sleeve 425A and outer plug 425B. Both outer sleeve 425A and outer plug 425B are hollow, cone-shaped structures, as illustrated in Fig. 9. Outer sleeve 425A is fabricated of a malleable material, such as annealed copper, which is relatively soft and workable, or pliable. Outer plug 425B is fabricated out of a high strength material such as steel or beryllium copper. Outer armor jacket 22 is placed between dual armor socket body 55 and outer sleeve 425A. Outer plug 425B is placed in contact with outer sleeve 425A as shown. Outer plug 425B is press-fitted into contact with outer sleeve 425A. Because outer sleeve 425A is formed of a malleable material, when outer plug 425B is press-fitted into contact with outer sleeve 425A, outer sleeve 425A will slightly deform to form a snug fitting between outer plug 425B, outer sleeve 425A, outer armor jacket 22, and socket body 55. In this manner, outer armor jacket 22 is rigidly secured within dual armor socket body 55 and, thus, within lower cable connector assembly 400.

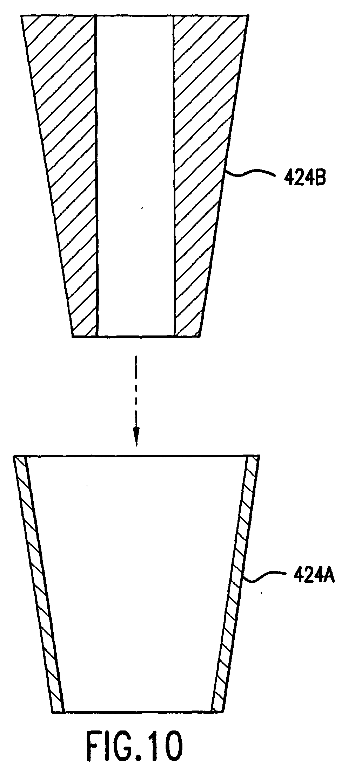

Inner armor jacket 21 is secured within dual armor socket body 55 and lower cable connector assembly 400 in a similar manner. To secure inner armor jacket 21, inner cold flow securing assembly 424 is utilized. Inner armor jacket 21 is placed between inner sleeve 424A of cold flow assembly 424 and inner plug 424B as shown. Inner sleeve 424A and inner plug 424B are constructed similarly to outer sleeve 425A and outer plug 425B, respectively, and are illustrated in Fig. 10. Inner plug 424B is press-fitted into contact with inner sleeve 424A. In this manner, inner armor jacket 21 is rigidly secured within dual armor socket body 55 and, thus, lower cable connector assembly 400.

As discussed previously, jack support assembly 17 connects lower cable connector assembly 400 and upper cable connector assembly 300. Jack assembly 17 contains a hollow center such that core jacket 20 of riser cable 200 can extend up through jack assembly 17 for termination in upper cable connector assembly 300. Upper cable connector assembly 300 is connected to jack assembly 17 by utilizing core termination support 59 and support collar 58. Core termination support 59 and support collar 58 are connected to upper cable connector assembly 300 and jack 17 is secured to core termination support 59 by utilizing conventional screws. Upper stabilizer 57 provides physical support for upper cable connector assembly 300 within housing 16.

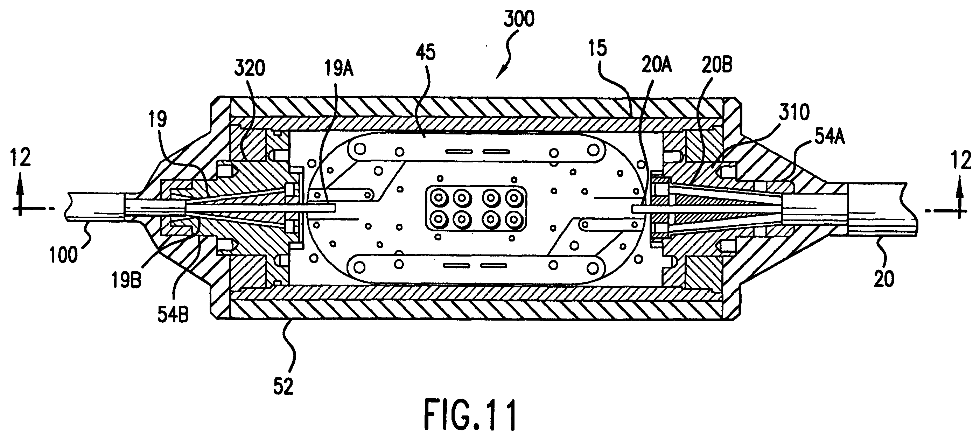

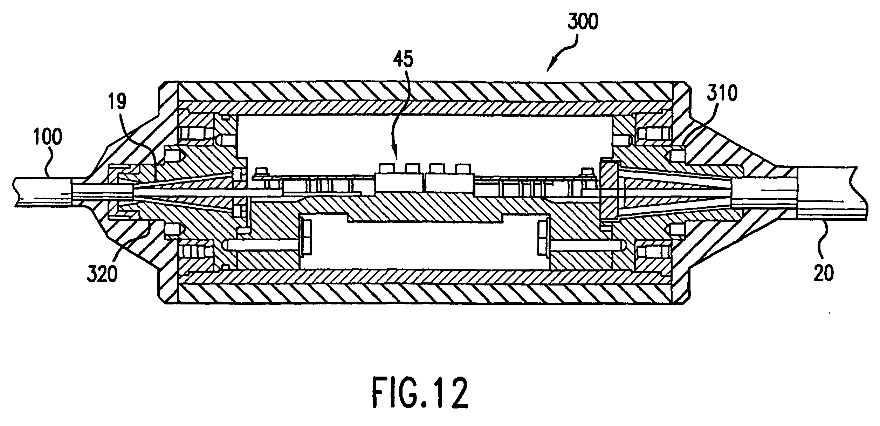

In continuing with the discussion of the termination of riser cable 200 within housing 16, core jacket 20 extends up through lower cable connector assembly 400 and jack assembly 17 and is received in upper cable connector assembly 300. As mentioned previously, local cable 100 is also received in upper cable connector assembly 300. Local cable 100 enters housing assembly 16 through cap assembly 3 and is then received in connector assembly 300. Core jacket 19 of local cable 100, as illustrated in Figs. 11 and 12, enters upper cable connector assembly 300 and is secured within the connector assembly. Therefore, upper cable connector assembly 300 is the assembly where local cable 100 is secured within housing 16 and where the optical fibers in local cable 100 are joined to the optical fibers in riser cable 200.

Figs. 11 and 12 illustrate one embodiment for the upper cable connector assembly 300 of the present invention. As shown, upper cable connector assembly 300 consists of the outer structural members of sleeve 52 and housing 15. Core jacket 20 of riser cable 200 and core jacket 19 of local cable 100 are received and secured in upper cable connector assembly 300 in cold flow assemblies 310 and 320, respectively. Core jacket 20 and core jacket 19 are each comprised of an armor jacket. The armor jacket of each core cable is secured within upper connector assembly 300 by utilizing the arrangement as disclosed in U.S. Pat. No. 4,507,008, as discussed previously. Therefore, strength member 20B of core jacket 20 and strength member 19B of core jacket 19 are secured within sockets 54A and 54B, respectively.

Inner protective tube 20A of core jacket 20 contains the optical fibers from riser cable 200. Inner protective tube 19A of core jacket 19 contains the optical fibers from local cable 100. The optical fibers from each cable are joined by utilizing well-known methods. Shelf assembly 45 is one apparatus that may be used to join the optical fibers from local cable 100 and riser cable 200 in the present invention.

In this manner, a secure, multi-attachment point cable riser assembly is provided. Dual physical connections are provided within the cable riser assembly for riser cable 200 and a single connection point is provided for local cable 100. Through use of the present invention, a riser cable may be rigidly and securely connected to a local communications cable.

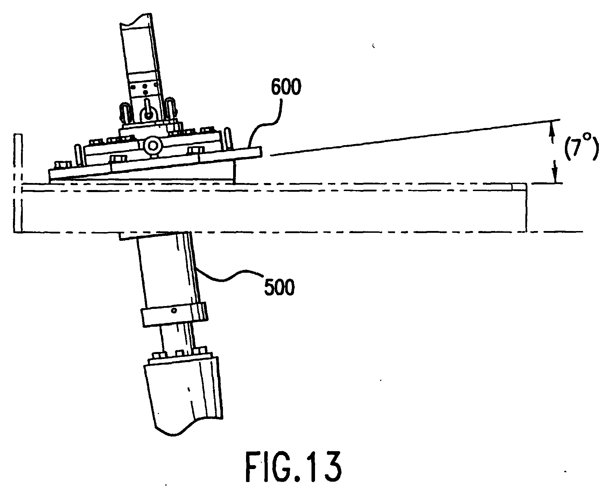

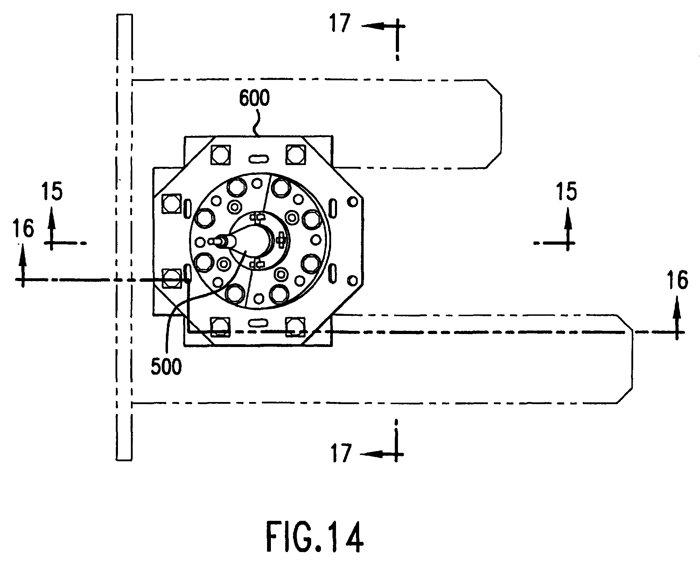

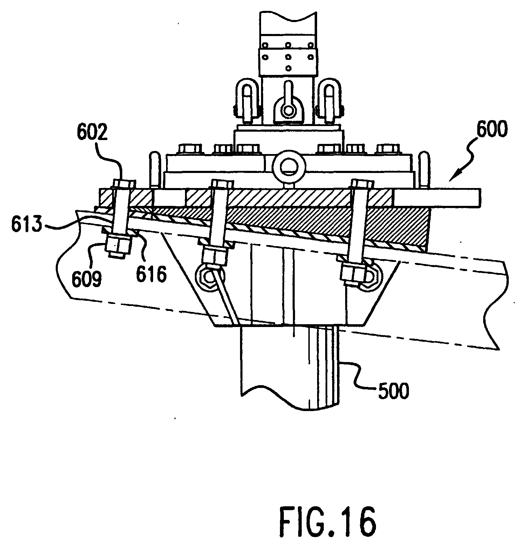

Figs. 13-17 illustrate one configuration for securing an embodiment of the riser assembly of the present invention to a dynamic platform. As shown, Figs. 13 and 14 show side and top views, respectively, of the riser cable assembly 500 and platform assembly 600. Supporting structure of the platform is shown in phantom.

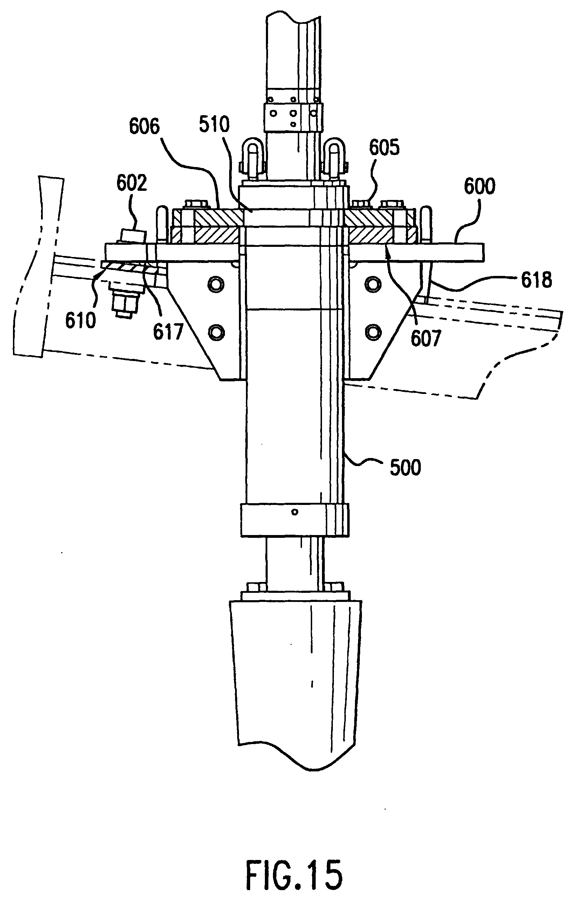

As shown in Figs. 15-17, split flange 606 is provided and securely mates within collar 510 of riser cable assembly 500. Split flange 606 rests on top of support flange 607 and is secured to platform assembly 600 by utilizing bolts 605. Platform assembly 600 is mounted at an angle with respect to the dynamic platform (shown in phantom). Platform assembly 600 is mounted at an angle in order to reduce the stresses applied to riser cable 200 as it extends downward toward the sea floor. An angle of 7 degrees is preferable.

In order to mount platform assembly 600 at an angle, rear spacer 617 and side spacer 618 are provided. Rear and side spacers 617 and 618 are positioned between platform assembly 600 and the dynamic platform. Insulation plate 610 is positioned between rear spacer 617 and the dynamic platform. Platform assembly 600 is mounted to the dynamic platform by utilizing bolts 602, insulator sleeves 613, insulator spacers 616, and nuts 609.

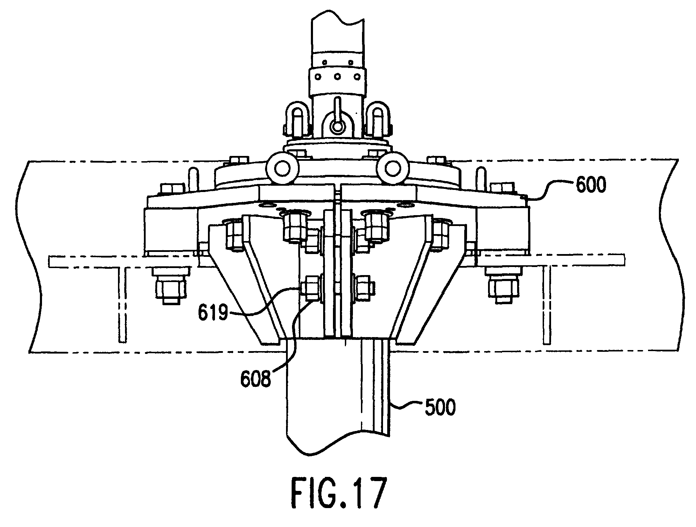

As shown in Fig. 17, the platform assembly may be formed in several segments which, when assembled together, fit around riser cable assembly 500. In this configuration, the various segments may be assembled and joined together by utilizing studs 619 and nuts 608.

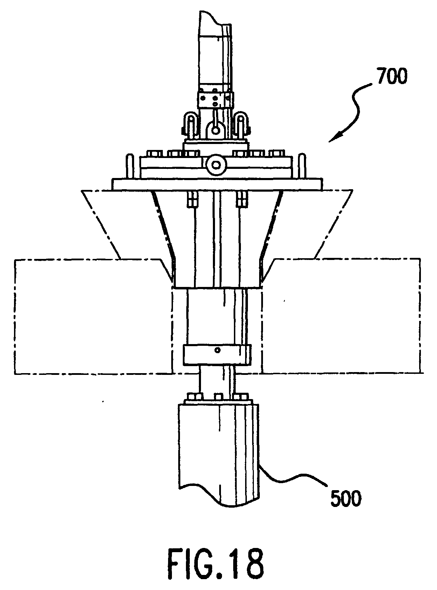

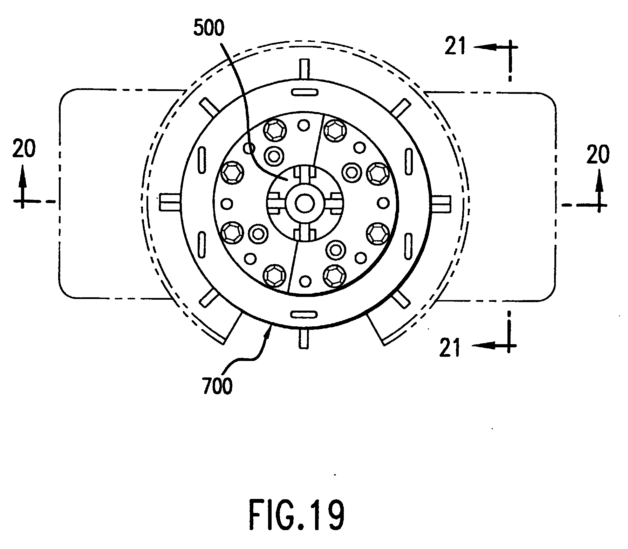

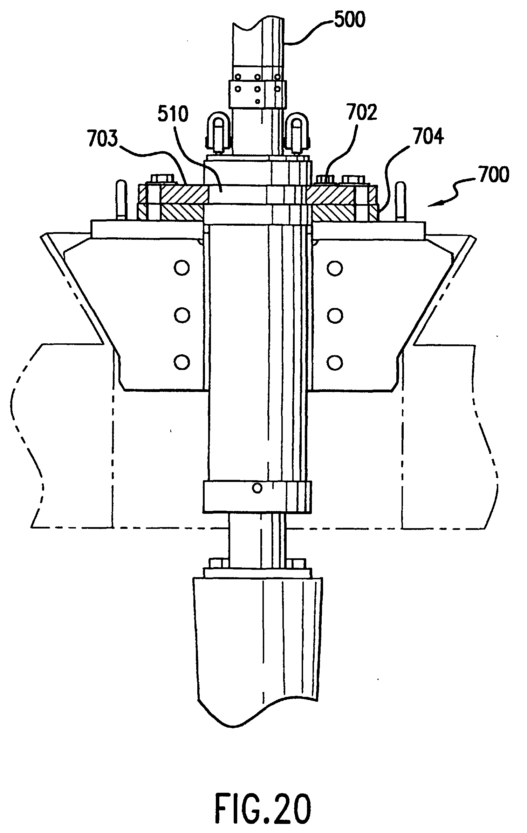

Figs. 18-19 illustrate an alternative configuration for securing an embodiment of the riser assembly of the present invention to a dynamic platform. As shown, Figs. 18 and 19 show side and top views, respectively, of the riser cable assembly 500 and platform assembly 700. Again, supporting structure of the platform is shown in phantom. As shown in Fig. 20, which is a cross-sectional view of the embodiment of Figs. 18 and 19, split flange 703 is provided and securely mates within collar 510 of riser cable assembly 500. Split flange 703 rests on top of support flange 704 and is secured to platform assembly 700 by utilizing bolts 702. As contrasted with the embodiment of Figs. 13-17, platform assembly 700 is not mounted at an angle with respect to the dynamic platform in this embodiment.

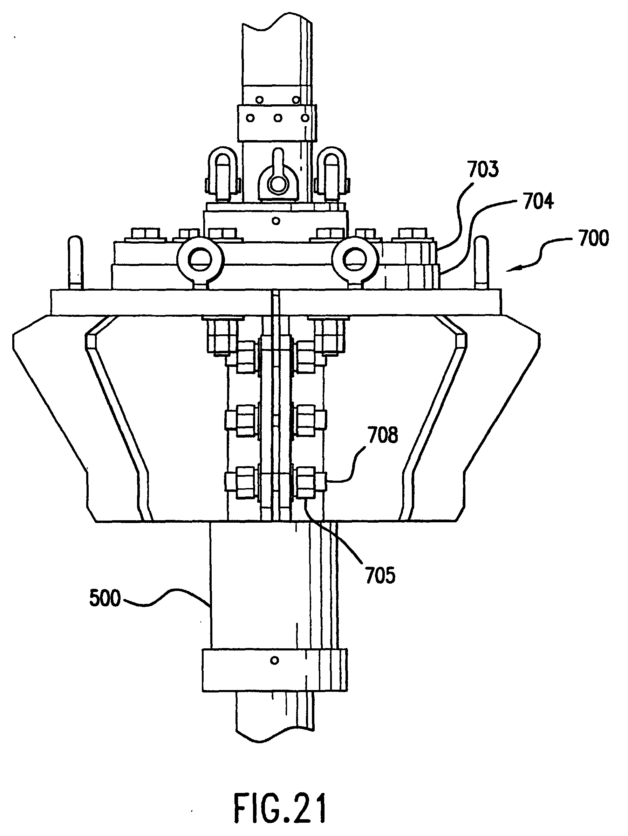

As discussed previously when referring to Fig. 17, as is also shown in Fig. 21, the platform assembly may be formed in several segments which, when assembled together, fit around riser cable assembly 500. The various segments may again be assembled and secured together by utilizing studs 708 and nuts 705.

Several variations on the disclosed embodiments are contemplated. In the disclosed embodiments, riser cable 200 was secured in lower cable connector assembly 400 by utilizing a dual cold flow arrangement and riser cable 200 and local cable 100 were secured in upper cable connector assembly 300 by utilizing a single cold flow arrangement for each cable, however, it is not required that this configuration of cold flow arrangements be utilized in each cable connector assembly. For example, a single cold flow arrangement could be utilized in lower cable connector assembly 400 and dual cold flow arrangements could be utilized for connecting each of riser cable 200 and local cable 100 in upper cable connector assembly 300. Any number of cold flow arrangements could be utilized in each connector assembly depending upon the particular application in which the riser cable assembly is utilized.

Additionally, epoxy could be utilized in each of the upper and lower cable connector assemblies in order to enhance the connection between the connector assembly and the cable(s).

The disclosed embodiments are illustrative of the various ways in which the present invention may be practiced. Other embodiments can be implemented by those skilled in the art without departing from the spirit and scope of the present invention.

## Claims

1. A fiber optic riser cable assembly for connecting a fiber optic riser cable to a local communications cable, comprising:
a first cable connector assembly, said first cable connector assembly fastening an armor jacket of the riser cable within said first cable connector assembly;
a second cable connector assembly, said second cable connector assembly fastening strength members of both the riser cable and the local communications cable within said second cable connector assently;
an optical fiber mating assembly contained within said second cable connector assembly; and
a connecting member, said connecting member connecting said first cable connector assembly to said second cable connector assembly.

2. The fiber optic riser cable assembly of claim 1 wherein said first cable connector assembly includes a dual cold flow stranded cable termination arrangement.

3. The fiber optic riser cable assembly of claim 2 wherein said first cable connector assembly includes epoxy, said epoxy applied to said dual cold flow stranded cable termination arrangement.

4. The fiber optic riser cable assembly of any one of the preceding claims wherein said second cable connector assembly includes a first and second cold flow stranded cable termination arrangement, said first cold flow stranded cable termination arrangement securely fastening strength members of the riser cable within said second cable connector assembly and said second cold flow stranded cable termination arrangement securely fastening strength members of the local communications cable within said second cable connector assembly.

5. The fiber optic riser cable assembly of claim 4 wherein said first and second cold flow stranded cable termination arrangements contain epoxy.

6. The fiber optic riser cable assembly of any one of the preceding claims wherein said connecting member is a screw jack assembly.

7. The fiber optic riser cable assembly of any one of the preceding claims further comprising a housing assembly, said housing assembly enclosing said first and second cable connector assemblies and said connecting member.

8. A method for connecting a fiber optic riser cable to a local communications cable, comprising the steps of:
fastening an armor jacket of the riser cable in a first cable connector assembly;
fastening strength members of both the riser cable and the local communications cable within a second cable connector assembly;
terminating the fibers of the riser cable and the local communications cable in said second cable connector assembly; and
connecting said first cable connector assembly to said second cable connector assembly.

9. The method of claim 8 wherein the step of fastening the armor jacket of the riser cable in said first cable connector assembly comprises the step of securing the armor jacket in a dual cold flow stranded cable termination arrangement.

10. The method of claim 9 further comprising the step of applying epoxy to said dual cold flow stranded cable termination arrangement.

11. The method of any one of claims 8 to 10 wherein the step of fastening strength members of both the riser cable and the local communications cable within said second cable connector assembly comprises the steps of securing the strength members of the riser cable in a first cold flow stranded cable termination arrangement and securing the strength members of the local communications cable in a second cold flow stranded cable termination arrangement.

12. The method of claim 11 further comprising the step of applying epoxy to said first and second cold flow stranded cable termination arrangements.

13. The method of any one of claims 8 to 12 wherein the step of connecting said first cable connector assembly to said second cable connector assembly comprises the step of mating a screw jack assembly.

14. The method of any one of claims 8 to 13 further comprising the step of enclosing said first and second cable connector assemblies within a housing assembly.

15. The method of claim 14 further comprising the step of attaching said housing assembly to a dynamic platform.

16. The method of claim 15 wherein said dynamic platform is an off-shore oil rig.

17. A dynamic off-shore oil platform fiber optic riser cable assembly comprising:
an elongated, cylindrical housing assembly, said housing assembly containing a first cable connector assembly and a second cable connector assembly within said housing assembly, said housing assembly connected to a local communications cable installed on the dynamic platform at a first end and connected to a riser cable at a second end, said first end also including a collar extending around the circumference of said housing;
a platform assembly, wherein said platform assembly is secured to said housing assembly by mating said platform assembly within said collar of said housing assembly and wherein said platform assembly is mounted to the dynamic platform.

18. The dynamic off-shore oil platform fiber optic riser cable assembly of claim 17 wherein said platform assembly is mounted at an angle of approximately 7 degrees with respect to the dynamic platform.

19. The dynamic off-shore oil platform fiber optic riser cable assembly of claim 17 or 18 further comprising a plurality of shackles attached to said housing assembly.

20. A stranded cable termination arrangement comprising:
a socket body;
an outer sleeve and an outer plug wherein said outer sleeve and said outer plug are contained within said socket body and wherein said outer plug is disposed within said outer sleeve, said outer plug and said outer sleeve in pressure contact with each other; and
an inner sleeve and an inner plug wherein said inner sleeve and said inner plug are contained within said socket body and within said outer sleeve and said outer plug and wherein said inner plug is disposed within said inner sleeve and said inner plug and said inner sleeve are in pressure contact with each other;
wherein a first armor jacket of a fiber optic cable is securely positioned between said outer sleeve and said socket body and wherein a second armor jacket of said fiber optic cable is securely positioned between said inner sleeve and said outer plug.
